(19) **Europäisches Patentamt / European Patent Office / Office européen des brevets**

(11) **EP 4 354 227 A1**

(12) **DEMANDE DE BREVET EUROPEEN**

(43) Date de publication:
**17.04.2024  Bulletin 2024/16**

(21) Numéro de dépôt: **23202801.9**

(22) Date de dépôt: **10.10.2023**

(51) Classification Internationale des Brevets (IPC):
**G03H 1/08** *(2006.01)*       G06T 7/20 *(2017.01)*
**G06V 10/77** *(2022.01)*       G06T 7/55 *(2017.01)*
**G06V 20/64** *(2022.01)*

(52) Classification Coopérative des Brevets (CPC):
**G03H 1/0808; G03H 1/0866; G06V 10/7715; G06V 20/647;** G03H 2001/0883

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **11.10.2022  FR 2210435**

(71) Demandeur: **Fondation B-COM**
**35510 Cesson-Sévigné (FR)**

(72) Inventeurs:
• **MADALI, Nabil**
**35700 RENNES (FR)**
• **GILLES, Antonin**
**35700 RENNES (FR)**
• **GIOIA, Patrick**
**35530 SERVON-SUR-VILAINE (FR)**
• **MORIN, Luce**
**35700 RENNES (FR)**

(74) Mandataire: **Jacobacci Coralis Harle**
**32, rue de l'Arcade**
**75008 Paris (FR)**

(54) **PROCÉDÉ ET UNITÉ DE CALCUL POUR ESTIMER UNE CARTE DE PROFONDEUR À PARTIR D'UN HOLOGRAMME NUMÉRIQUE, PROCÉDÉ DE CODAGE D'UNE SÉQUENCE VIDÉO, PROGRAMME D ORDINATEUR**

(57) L'invention concerne un procédé (100), mis en oeuvre par une unité de calcul, d'estimation d'une carte de profondeur à partir d'un hologramme numérique représentant une scène, ledit procédé comprenant :
- une étape de reconstruction (E2), au moyen dudit hologramme numérique, de n images de la scène, chaque image étant associée à une profondeur de ladite scène et comprenant une pluralité de pixels, chaque image étant définie par une même fenêtre ;
- pour chaque image, une étape de formation (E4) de vignettes formées par des pixels contigus et associées à des régions bidimensionnelles de la fenêtre ;
- une étape d'application (E6) d'un opérateur à chacune des vignettes de chaque image associée à une profondeur pour fournir une métrique par vignette et par profondeur ;
- une étape de détermination (E8) d'une profondeur associée à chaque région bidimensionnelle sur la base au moins des métriques relatives aux vignettes associées à la région bidimensionnelle concernée ;
- une étape de détermination (E10) de la profondeur d'un pixel de la carte de profondeur par sélection de la profondeur présentant un nombre de répétition maximal dans les régions bidimensionnelles comprenant le pixel concerné

**Fig.5**

**Description**

Domaine technique de l'invention

La présente invention concerne le domaine technique de l'holographie numérique.
Elle concerne plus particulièrement un procédé d'estimation d'une carte de profondeur à partir d'un hologramme numérique représentant une scène. Elle concerne également un procédé de codage d'une séquence vidéo utilisant un vecteur de mouvement à partir de deux hologrammes numériques.

Etat de la technique

Un hologramme numérique est l'enregistrement sous forme numérique d'une section, au niveau d'un plan de référence, d'un champ lumineux se propageant dans un espace tridimensionnel, en vue de pouvoir restituer ultérieurement ce champ lumineux à un utilisateur.
On connaît des méthodes pour retrouver l'information de profondeur dans un hologramme numérique. Ces méthodes utilisent des méthodes de détermination de la profondeur à partir du plan de mise au point (connues notamment sous le nom anglais de « depth from focus »). Ces dernières sont configurées pour récupérer l'information de profondeur à partir d'images en deux dimensions en utilisant des mesures de degré du flou sur ces images. Ces méthodes sont fonctionnelles, mais posent divers problèmes, notamment de précision et de justesse car dans ces méthodes plusieurs profondeurs peuvent être associées à un même pixel, provoquant des erreurs sur le choix de la profondeur attribué à un pixel.

Présentation de l'invention

Dans ce contexte, l'invention propose un procédé, mis en oeuvre par une unité de calcul, d'estimation d'une carte de profondeur à partir d'un hologramme numérique représentant une scène, ledit procédé comprenant :

- une étape de reconstruction, au moyen dudit hologramme numérique, de n images de la scène, chaque image étant associée à une profondeur de ladite scène et comprenant une pluralité de pixels, chaque image étant définie par une même fenêtre ;
- pour chaque image, une étape de formation de vignettes formées par des pixels contigus et associées à des régions bidimensionnelles de la fenêtre ;
- une étape d'application d'un opérateur à chacune des vignettes de chaque image associée à une profondeur pour fournir une métrique par vignette et par profondeur ;
- une étape de détermination d'une profondeur associée à chaque région bidimensionnelle sur la base au moins des métriques relatives aux vignettes associées à la région bidimensionnelle concernée ;
- une étape de détermination de la profondeur d'un pixel de la carte de profondeur par sélection de la profondeur présentant un nombre de répétition maximal dans les régions bidimensionnelles comprenant le pixel concerné.

Grâce à l'invention, le procédé propose une solution qui permet d'éviter les redondances de profondeur associées à un pixel. De ce fait, une seule et unique profondeur est attribuée à chaque pixel en sortie du procédé selon la présente divulgation. La carte de profondeur ainsi obtenue est donc plus précise et plus juste.
Dans un mode de réalisation, la profondeur associée à chaque région est déterminée par sélection de la profondeur pour laquelle est maximal l'écart en valeur absolue entre la métrique relative à la région bidimensionnelle concernée et à la profondeur concernée, et la moyenne des métriques relatives à la région bidimensionnelle concernée.
Grâce à ce mode de réalisation, le choix de la profondeur associée aux pixels de chaque région bidimensionnelle est moins sensible au bruit de tavelure ou de chatoiement (connu sous le nom anglais « speckle ») et prouvant être induit dans l'étape de reconstruction. En outre, le choix de la profondeur associée aux pixels de chaque région bidimensionnelle est également moins sensible au flou présent sur les vignettes pouvant être causé par une faible profondeur de champ dans l'hologramme numérique. De telles caractéristiques permettent ainsi d'obtenir une carte de profondeur encore plus précise et plus juste. Les performances de l'estimation de la carte de profondeur sont donc améliorées.
Dans un autre mode de réalisation, la fenêtre des n images présente une première dimension principale et deuxième dimension principale et chaque vignette présente une première dimension secondaire et deuxième dimension secondaire, ladite première dimension secondaire, respectivement ladite deuxième dimension secondaire, dépendant de la première dimension principale, respectivement de la deuxième dimension principale, par un facteur de réduction.
Selon un exemple envisageable, le facteur de réduction est compris entre 61 et 32.
Selon un autre exemple encore, chaque vignette est centrée sur au moins un pixel.
Dans un mode de réalisation, chaque vignette présente une forme rectangulaire définie par la formule suivante :

$$R_{i,m,n}(u,v) = I_i\left(m + u - \frac{s1}{2}, n + v - \frac{s2}{2}\right)$$

avec i correspondant à un indice d'une image, notée I, associé à une profondeur des n images, m et n correspondant aux cordonnées du pixel dans la fenêtre, u et v correspondant aux cordonnées du pixel dans la région bidimensionnelle associée à la vignette dans laquelle le pixel est centré, s1 correspondant à une première dimension principale de la fenêtre associée à l'image I d'indice i et s2 correspondant à une deuxième dimension principale de la fenêtre associée à l'image I d'indice i.

Dans un exemple envisageable, la première et deuxième dimensions principales sont égales.

Dans un mode de réalisation, le procédé comprend une étape de détermination d'une profondeur minimale et d'une profondeur maximale de ladite scène, les n images étant espacées d'une distance échantillonnée uniformément dans un intervalle défini entre la profondeur maximale et la minimale de ladite scène.

Dans un exemple de réalisation, n est égal à 250.

Dans un mode de réalisation, l'opérateur appliqué dans l'étape d'application est au moins basé sur au moins un des opérateurs suivants :

- un gradient ;
- un Laplacien ;
- des ondelettes ;
- une transformée de Gabor ;
- des statistiques à partir d'informations extraites sur les n images ou sur l'hologramme numérique ;
- une transformée en cosinus discrète.

Dans un mode de réalisation, les n images fournies à l'étape de reconstruction holographique sont calculées en utilisant une propagation du spectre angulaire définie par la formule suivante :

$$I_i = F^{-1}\left\{F(H)e^{j2\pi z_i \sqrt{\lambda^{-2} - f_x^2 - f_y^2}}\right\}$$

avec F et F$^{-1}$ correspondant à des transformées de Fourier directe et inverse, respectivement, et $f_x$ et $f_y$ sont les coordonnées fréquentielles de l'hologramme numérique dans le domaine de Fourier selon une première direction spatiale X et une deuxième direction spatiale Y de l'hologramme numérique, $\lambda$ la longueur d'onde d'acquisition, i l'indice de l'image I reconstruite avec i allant de 1 à n, $z_i$ la profondeur associée à l'image reconstruite.

Dans un mode de réalisation, le procédé comprend en outre une construction d'une image couleur associant à un pixel de la carte de profondeur des informations colorimétriques sur la base des informations colorimétriques du pixel concerné à la profondeur déterminée à l'étape de détermination de la profondeur d'un pixel de la carte de profondeur.

L'invention propose également un procédé, mis en oeuvre par une unité de calcul, d'estimation d'une carte de profondeur à partir d'un hologramme numérique représentant une scène, ledit procédé comprenant :

- une étape de reconstruction, au moyen dudit hologramme numérique, de n images de la scène, chaque image étant associée à une profondeur de ladite scène et comprenant une pluralité de pixels, chaque image étant définie par une même fenêtre ;
- pour chaque image, une étape de formation de vignettes formées par des pixels contigus et associées à des régions bidimensionnelles de la fenêtre ;
- une étape d'application d'un opérateur à chacune des vignettes de chaque image associée à une profondeur pour fournir une métrique par vignette et par profondeur ;
- une étape de détermination d'une profondeur associée à chaque région bidimensionnelle par sélection de la profondeur pour laquelle est maximal l'écart en valeur absolue entre la métrique relative à la région bidimensionnelle concernée et à la profondeur concernée, et la moyenne des métriques relatives à la région bidimensionnelle concernée.

Dans un mode de réalisation, le procédé comprend en outre une étape de détermination de la profondeur d'un pixel de la carte de profondeur par sélection de la profondeur présentant un nombre de répétition maximal dans les régions bidimensionnelles comprenant le pixel concerné.

L'invention propose également un procédé de codage d'une séquence vidéo comprenant au moins un premier hologramme numérique et au moins un deuxième hologramme numérique, ledit procédé comprenant une étape d'estimation d'une première carte profondeur à partir du premier hologramme numérique comme exposé ci-dessus et une étape d'estimation d'une deuxième carte profondeur à partir du deuxième hologramme numérique comme exposé ci-dessus, ledit procédé comprenant en outre une étape de détermination d'un vecteur de mouvement sur la base de la première et deuxième cartes de profondeur.

Dans un mode de réalisation, le procédé comprend :

- une étape de calcul d'un hologramme prédit par application au premier hologramme dudit vecteur de mouvement ;
- une étape de calcul d'un résidu par différence entre le deuxième hologramme et l'hologramme prédit.

L'invention propose également une unité de calcul pour estimer une carte de profondeur à partir d'un hologramme numérique représentant une scène, ladite unité de calcul comprenant :

- un module de reconstruction configuré pour reconstruire n images de ladite scène au moyen dudit hologramme numérique, chaque image étant associée à une profondeur de ladite scène et comprenant une pluralité de pixels, chaque image étant définie par une même fenêtre ;
- un module de formation configuré pour fournir des vignettes formés de pixels contigus à partir de chaque image, lesdites vignettes étant associées respectivement à des régions bidimensionnelles de la fenêtre ;
- un module d'application configuré pour appliquer un opérateur à chacune des vignettes de chaque image associée à une profondeur pour fournir une métrique par vignette et par profondeur ;
- un module de détermination d'une profondeur configuré pour déterminer une profondeur associée à chaque région bidimensionnelle ;
- un module de détermination configuré pour déterminer la profondeur d'un pixel de la carte de profondeur par sélection de la profondeur présentant un nombre de répétition maximal dans les régions bidimensionnelles comprenant le pixel concerné.

Dans un mode de réalisation, le module de détermination associé à chaque région bidimensionnelle est configuré pour sélectionner la profondeur pour laquelle est maximal l'écart en valeur absolue entre la métrique relative à la région bidimensionnelle concernée et à la profondeur concernée, et la moyenne des métriques relatives à la région bidimensionnelle concernée.

L'invention propose également une unité de calcul pour estimer une carte de profondeur à partir d'un hologramme numérique représentant une scène, ladite unité de calcul comprenant :

- un module de reconstruction configuré pour reconstruire n images de ladite scène au moyen dudit hologramme numérique, chaque image étant associée à une profondeur de ladite scène et comprenant une pluralité de pixels, chaque image étant définie par une même fenêtre ;
- un module de formation configuré pour fournir des vignettes formées de pixels contigus à partir de chaque image, lesdites vignettes étant associées respectivement à des régions bidimensionnelles de la fenêtre ;
- un module d'application configuré pour appliquer un opérateur à chacune des vignettes de chaque image associée à une profondeur pour fournir une métrique par vignette et par profondeur ;
- un module de détermination d'une profondeur configuré pour déterminer une profondeur associée à chaque région bidimensionnelle en sélectionnant la profondeur pour laquelle est maximal l'écart en valeur absolue entre la métrique relative à la région bidimensionnelle concernée et à la profondeur concernée, et la moyenne des métriques relatives à la région bidimensionnelle concernée.

Dans un mode de réalisation, l'unité de calcul comprend en outre un module de détermination configuré pour déterminer la profondeur d'un pixel de la carte de profondeur par sélection de la profondeur présentant un nombre de répétition maximal dans les régions bidimensionnelles comprenant le pixel concerné.

L'invention propose également un programme d'ordinateur comprenant des instructions exécutables par un processeur et conçues pour mettre en oeuvre un procédé tel qu'évoqué ci-dessus lorsque ces instructions sont exécutées par le processeur, l'unité de calcul susmentionnée étant par exemple formée par ce processeur.

L'invention propose enfin un support d'enregistrement, éventuellement amovible, lisible par un tel processeur et mémorisant un tel programme d'ordinateur.

Description détaillée de l'invention

De plus, diverses autres caractéristiques de l'invention ressortent de la description annexée effectuée en référence aux dessins qui illustrent des formes, non limitatives, de réalisation de l'invention et où :

- la figure 1 est une représentation schématique d'un mode de réalisation d'une unité de calcul pour estimer une carte de profondeur à partir d'un hologramme numérique représentant une scène ;
- la figure 2 est une représentation schématique d'un mode de réalisation d'une unité de calcul pour coder une séquence vidéo ;
- la figure 3 est une représentation schématique d'une image obtenue par un module de reconstruction de l'unité de calcul illustrée en figure 1 ;
- la figure 4 est une représentation schématique d'une image découpée par un module de formation de l'unité de calcul illustrée en figure 1 ;
- la figure 5 est une représentation schématique d'un premier mode de réalisation d'un procédé d'estimation d'une carte de profondeur selon la présente divulgation ;
- la figure 6 est une représentation schématique des images obtenues par une étape de reconstruction du procédé selon la présente divulgation ;
- la figure 7 est une représentation schématique d'un mode de réalisation d'un procédé de codage d'une séquence vidéo selon la présente divulgation.

Dispositif

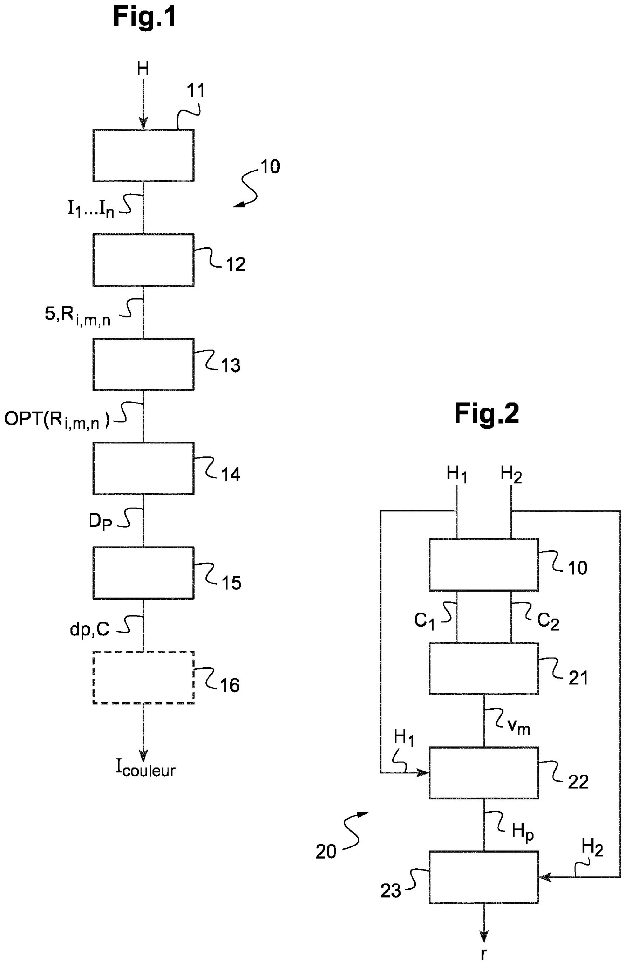

La figure 1 illustre un exemple d'unité de calcul 10 pour estimer une carte de profondeur C à partir d'un hologramme numérique H selon la présente divulgation.

Par unité de calcul 10, on entend tout ordinateur ou processeur ou tout autre élément électronique permettant d'implémenter une succession de commandes et/ou de calculs. Cette unité de calcul 10 comporte typiquement un processeur, une mémoire et différentes interfaces d'entrée et de sortie. Dans l'exemple illustré en figure 1, les données d'entrée de l'unité de calcul 10 comprennent au moins l'hologramme numérique H et les données de sortie de l'unité de calcul 10 comprennent au moins la carte de profondeur C estimée.

L'unité de calcul 10 illustrée en figure 1 comprend un module de reconstruction 11, un module de formation 12, un module d'application 13, un module de détermination 14 d'une profondeur Dp, un module de détermination 15 d'une profondeur dp à chaque pixel.

Chacun de ces modules est par exemple mis en oeuvre du fait de l'exécution, par le processeur, d'instructions de programme d'ordinateur, qui peuvent être mémorisées dans la mémoire susmentionnée. En variante, un au moins de ces modules peut être mis en oeuvre au moyen d'un circuit électronique dédié, tel qu'un circuit intégré à application spécifique.

Suivant la présente divulgation, l'hologramme numérique H représentant une scène est reçu par le module de reconstruction 11. Dans cet exemple, la scène est une scène tridimensionnelle définie suivant un repère (O, x, y, z) dans lequel O représente l'origine du repère et x, y, z représentant des directions spatiales de l'hologramme numérique H avec x étant une première direction spatiale de l'hologramme numérique H, y étant une deuxième direction spatiale de l'hologramme numérique H et z étant un axe de profondeur de l'hologramme numérique.

Dans cet exemple, la scène peut comprendre un objet ou plusieurs objets.

L'hologramme numérique H dans la présente divulgation est défini par une matrice de pixels dans un plan défini par la première et deuxième directions spatiales (x,y), l'axe des profondeurs z étant défini perpendiculaire à ce plan. Dans la suite de la description, l'hologramme numérique H est défini dans le plan d'équation z=0. Chaque pixel de l'hologramme numérique H représente typiquement une onde lumineuse reçue au niveau de ce pixel.

L'hologramme numérique H dans la présente divulgation a été acquis avec une longueur d'onde $\lambda$ dans le visible, par exemple entre 400 nm et 780 nm. Dans cet exemple, la longueur d'onde peut être de 550 nm.

Bien entendu, dans la présente divulgation, plusieurs hologrammes numériques acquis avec plusieurs longueurs d'ondes d'acquisition et illustrant une même scène peuvent être traités par l'unité de calcul 10. Ces différents hologrammes numériques seront traités comme cela sera décrit ci-dessous.

Le module de reconstruction 11 est configuré pour reconstruire n images $I_i$ de la scène au moyen de l'hologramme numérique H reçu, avec i un entier allant de 1 à n.

Les images reconstruites $I_i$ peuvent présenter plusieurs espaces colorimétriques en reconstruisant les images $I_i$ à partir de plusieurs hologrammes numériques H acquis à différentes longueurs d'onde (et illustrant la même scène). A cet effet, les images reconstruites $I_i$ peuvent être des images RGB.

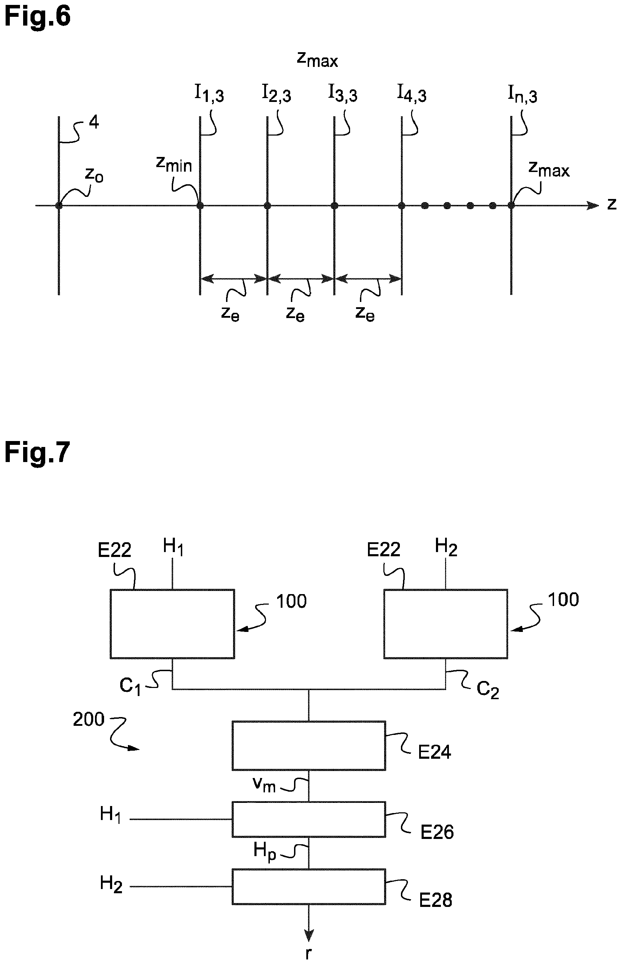

Suivant la présente divulgation, chaque image reconstruite $I_i$ est définie dans un plan de reconstruction qui est perpendiculaire à l'axe de profondeur de l'hologramme numérique H (le long de l'axe z). Chaque plan de reconstruction est associé à une valeur de profondeur (comme expliqué en figure 6), permettant d'associer à chaque image reconstruite $I_i$ une profondeur $z_i$, l'indice i se référant à l'indice de l'image reconstruite $I_i$.

Suivant cet exemple, le module de reconstruction 11 fournit n images $I_i$ de la scène, chacune étant définie par une pluralité de pixels. Suivant la présente divulgation, les images $I_i$ sont toutes définies par une même fenêtre 2, permettant ainsi d'obtenir des images $I_i$ de même taille.

Dans la suite de la description, la fenêtre 2 est représentée par un plan bidimensionnel défini par la première et deuxième directions spatiales (x, y). Dans la présente divulgation, la fenêtre 2 est définie par l'ensemble des pixels 1 de l'image $I_i$, ce qui signifie que la fenêtre 2 est de la taille de l'image $I_1$.

Les images reconstruites sont de préférence constituées d'autant de pixels que l'hologramme numérique H. Ainsi, les images reconstruites $I_i$ et l'hologramme numérique H sont de même taille.

Chaque image fournie ($I_1$ à $I_n$) par le module de reconstruction 11 est associée à une profondeur notée $z_i$, avec i correspondant à l'indice associé à l'image $I_i$ de la scène. Dans la présente divulgation, le module de reconstruction 11 est configuré pour reconstruire au moins 2 images. A titre d'exemple, 250 images sont reconstruites par le module de reconstruction 11 à partir de l'hologramme numérique H. Ces 250 images seront chacune associée à une profondeur $z_i$. Bien entendu, dans d'autres modes de réalisation, plus d'images ou moins d'images peuvent être reconstruites par le module de reconstruction 11.

On utilise dans la suite des régions bidimensionnelles R de la fenêtre 2 précitée. Ces régions bidimensionnelles R sont par exemple des rectangles inclus dans la fenêtre 2. Les régions bidimensionnelles R sont constituées d'un nombre fixe de pixels contigus de l'image $I_i$. Toutes les images reconstruites $I_i$ présentent les mêmes régions bidimensionnelles R, ce qui signifie que les régions bidimensionnelles R de l'image $I_1$ seront identiques aux régions bidimensionnelles R de l'image $I_2$, $I_3$, ...$I_n$. En outre, suivant la présente divulgation, les régions bidimensionnelles R peuvent se superposer. Cela signifie que chaque pixel d'une image $I_i$ donnée peut appartenir à plusieurs régions bidimensionnelles R. Le chevauchement des régions bidimensionnelles R dans les images reconstruites améliore la précision de l'estimation de la carte de profondeur. A titre d'exemple, certains pixels peuvent appartenir à au moins deux régions bidimensionnelles.

Les images $I_i$ sont ensuite transmises au module de formation 12. Suivant la présente divulgation, pour chaque image $I_i$, le module de formation 12 est configuré pour former une vignette 5 pour chaque région bidimensionnelle R de l'image donnée. Les vignettes 5 sont formées de pixels 1 contigus à partir de chaque image $I_i$. Ainsi, le module de formation 12 est configuré pour découper chaque image $I_i$ en des vignettes 5 réalisées à partir de pixels contigus appartenant à une même image $I_i$. Dans la présente divulgation, les vignettes 5 sont associées respectivement à des régions bidimensionnelles R de la fenêtre 2, ce qui signifie que les pixels 1 de chaque vignette 5 définissent une région bidimensionnelle R.

Dans cet exemple, les images $I_i$ sont toutes découpées de la même façon. Ainsi, les régions bidimensionnelles R de l'image $I_1$ seront similaires aux régions bidimensionnelles de l'image $I_2$, ou $I_3$, ou etc. Cela est dû au fait que les régions bidimensionnelles R de chaque image $I_i$ sont composées de pixels ayant des coordonnées spatiales similaires dans les images $I_i$.

Les vignettes 5 sont ensuite transmises au module d'application 13. Le module d'application 13 est configuré pour appliquer un opérateur OPT à chacune des vignettes 5. Cet opérateur OPT est appliqué à chacune des vignette 5 de chaque image $I_i$ associée à une profondeur z, ici des 250 images, pour fournir une métrique par vignette 5 et par profondeur (associée à chaque plan de reconstruction 3).

A partir des vignettes 5 et de la métrique associée à chaque vignette 5, le module de détermination 14 d'une profondeur est configuré pour déterminer une profondeur Dp associée à chaque région bidimensionnelle R.

Pour cela, le module de détermination 14 d'une profondeur associée à chaque région bidimensionnelle R est configuré pour sélectionner la profondeur Dp pour laquelle est maximal l'écart en valeur absolue entre la métrique relative à la région bidimensionnelle R concernée et à la profondeur concernée, et la moyenne des métriques relatives à la région bidimensionnelle R concernée. De ce fait, la profondeur Dp attribuée à chaque région bidimensionnelle R est ainsi moins sensible au bruit de tavelure ou de chatoiement et au flou, permettant de sélectionner de manière plus juste la profondeur dp attribuée à tous les pixels d'une même région bidimensionnelle R. Une telle caractéristique permet d'obtenir en sortie de l'unité de calcul 10 une carte de profondeur C encore plus précise et plus juste.

La profondeur Dp déterminée par le module de détermination 14 est enregistrée pour chaque région bidimensionnelle R.

A partir de la profondeur Dp associée à chaque région bidimensionnelle R, le module de détermination 15 est configuré pour déterminer la profondeur dp d'un pixel 1 de la carte de profondeur C.

Pour cela, le module de détermination 15 est configuré pour évaluer la répétition de la profondeur Dp en regardant toutes les régions bidimensionnelles qui comprennent le pixel concerné. La profondeur Dp présentant le nombre de répétition maximal dans ces régions est sélectionnée comme étant la profondeur dp associée à ce pixel.

Le module de détermination 15 est ensuite configuré pour réitérer cette action pour tous les pixels de la fenêtre 2. Ainsi, les pixels 1 de la fenêtre 2 se voient ainsi attribuer de manière individuelle une profondeur dp. Une carte de profondeur C peut être ainsi obtenue en sortie du module de détermination 15 lorsqu'une valeur de profondeur dp a été attribuée à tous les pixels 1 de la carte de profondeur C.

Dans la présente divulgation, la carte de profondeur C est définie par une matrice de pixels dans un plan défini par la première et deuxième directions spatiales (x, y). La carte de profondeur C est notamment définie par l'ensemble des pixels de la fenêtre 2 et des pixels de l'hologramme numérique H. Chaque pixel de la carte de profondeur C présente une valeur en intensité qui dépend de la profondeur dp associée au pixel concerné.

L'unité de calcul 10 selon la présente divulgation permet d'obtenir une carte de profondeur C dans laquelle une seule et unique profondeur dp est attribuée à chaque pixel 1 de la carte de profondeur C.

Dans la présente divulgation, la carte de profondeur C obtenue par l'unité de calcul 10 suivant la présente divulgation est donc précise et juste.

Optionnellement, l'unité de calcul 10 comprend en outre un module de construction 16 configuré pour construire une image couleur en associant à un pixel de la carte de profondeur C des informations colorimétriques sur la base des informations colorimétriques du pixel concerné à la profondeur de ce pixel dans la carte de profondeur déterminée par le module de détermination 15, comme cela sera décrit plus loin dans le procédé 100. Dans ce mode de réalisation une image couleur, notée $I_{couleur}$ peut en outre être fournie en sortie de l'unité de calcul 10.

La figure 2 illustre un autre exemple d'une unité de calcul 20 selon la présente divulgation. L'unité de calcul 20 comprend l'unité de calcul 10 illustrée en figure 1. Ainsi, seules les différences avec la figure 1 seront décrites. Cette unité de calcul 20 comporte typiquement un processeur, une mémoire et différentes interfaces d'entrée et de sortie.

L'unité de calcul 20 illustrée en figure 2 reçoit un premier hologramme numérique H1 et au moins un deuxième hologramme numérique H2. Le premier hologramme numérique H1 et le deuxième hologramme numérique sont envoyés à l'unité de calcul 10 afin de fournir une première carte profondeur C1 associée au premier hologramme numérique H1 et une deuxième carte de profondeur C2 associée au deuxième hologramme numérique H2.

L'unité de calcul illustrée en figure 2 comprend en outre un module de détermination 21 d'un vecteur de mouvement $v_m$ sur la base de la première carte de profondeur C1 et deuxième carte de profondeur C2. Ainsi, un vecteur de mouvement $v_m$ est fourni en sortie du module de détermination 21 comme cela sera décrit plus loin dans le procédé 200.

Optionnellement, l'unité de calcul 20 illustrée en figure 2 comprend en outre un module de prédiction 22 par application au premier hologramme numérique H1 du vecteur de mouvement $v_m$ (voir procédé 200). Dans ce cas, le module de prédiction 22 reçoit le premier hologramme numérique H1 et le vecteur de mouvement $v_m$ calculé par le module de détermination 21 et fournit l'hologramme prédit $H_p$.

Dans ce mode de réalisation, l'unité de calcul 20 comprend aussi de manière non limitative un module de calcul 23 d'un résidu r. Le module de calcul 23 du résidu utilise le deuxième hologramme H2 et l'hologramme prédit $H_p$ pour fournir le résidu r par différence entre le deuxième hologramme H2 et l'hologramme prédit $H_p$.

Procédé

Un premier mode de réalisation d'un procédé 100 mis en oeuvre par l'unité de traitement 10 illustrée en figure 1 va être explicité à l'aide des figures 2 à 6.

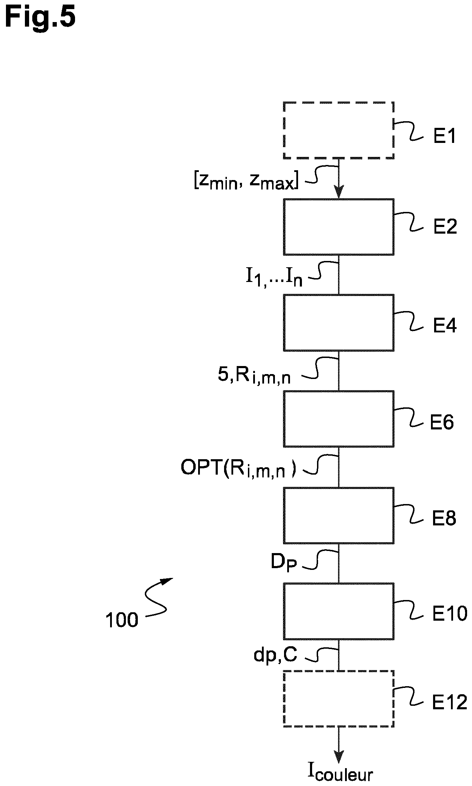

La figure 5 illustre un exemple de procédé 100 mis en oeuvre par l'unité de calcul 10 illustrée en figure 1.

Le procédé 100 illustré en figure 5 comprend une étape de reconstruction E2, une étape de formation E4, une étape de d'application E6, une étape de détermination E8 d'une profondeur Dp associée à chaque région bidimensionnelle R et une étape de détermination de la profondeur dp d'un pixel.

Dans cet exemple, le procédé 100 débute par une étape de détermination E1 d'une profondeur minimale $z_{min}$ et d'une profondeur maximale $z_{max}$ dans la scène de l'hologramme numérique H. Cette étape de détermination E1 permet de choisir de manière plus efficace le nombre d'images $I_i$ reconstruites à l'étape de reconstruction E2 ainsi que la distance $z_e$ séparant chaque image $I_i$ (i.e. plan de reconstruction 3 de chaque image $I_i$) (voir ci-dessous).

Optionnellement, si les images reconstruites $I_i$ sont des images couleur (comme explicité dans la description de l'unité de calcul 10), par exemple RGB, l'étape de reconstruction E2 peut comprendre une conversion en niveau de gris des images reconstruites $I_i$ afin d'optimiser le temps d'implémentation des étapes suivantes du procédé 100. Bien entendu, l'information colorimétrique des images $I_i$ reconstruites peut être sauvegardée dans la mémoire de l'unité de calcul 10 afin d'être utilisée dans la suite du procédé 100.

Dans un mode de réalisation, la profondeur minimale $z_{min}$ et la profondeur maximale $z_{max}$ peuvent être déterminées visuellement à partir de l'intensité associée à chaque pixel de l'hologramme numérique H ou à partir d'une requête recherchant le pixel ayant l'intensité maximale et minimale. Bien entendu, dans un autre mode de réalisation, la profondeur minimale $z_{min}$ et la profondeur maximale $z_{max}$ peuvent être préalablement connues.

Le procédé 100 comprend ensuite l'étape de reconstruction E2, par le module de reconstruction 11, des n images $I_i$ de la scène au moyen du l'hologramme numérique H.

Suivant le procédé 100, une succession d'images $I_i$ est obtenue à la suite de l'étape de reconstruction E2 (figure 6). Chaque image $I_i$ est associée à une profondeur, notée $z_i$.

Dans cet exemple, 250 images $I_i$ sont reconstruites. Ainsi, n est égal à 250. Le nombre d'images reconstruites $I_i$ dépend du temps d'implémentation du procédé 100 et d'un nombre d'images minimales nécessaire pour estimer de manière précise la carte de profondeur C.

De préférence, les n images fournies à l'étape de reconstruction holographique E2 sont calculées en utilisant une propagation du spectre angulaire définie par la formule suivante :

$$I_i = F^{-1}\left\{F(H)e^{j2\pi z_i\sqrt{\lambda^{-2}-f_x^2-f_y^2}}\right\}$$

avec $F$ et $F^{-1}$ correspondant à des transformées de Fourier directe et inverse, respectivement, et $f_x$ et $f_y$ sont les coordonnées fréquentielles de l'hologramme numérique H dans le domaine de Fourier selon une première direction spatiale x et une deuxième direction spatiale y de l'hologramme numérique, $\lambda$ la longueur d'onde d'acquisition de l'hologramme numérique H, i l'indice de l'image I reconstruite avec i allant de 1 à n et $z_i$ la profondeur donnée dans le plan de reconstruction de l'image $I_i$.

La figure 6 illustre un exemple d'ensemble d'images $I_i$ reconstruites à l'étape de reconstruction E2 du procédé 100 par l'intermédiaire de la propagation du spectre angulaire.

En figure 6, les images reconstruites sont situées dans un plan de reconstruction 3 qui est perpendiculaire à un axe de profondeur (le long de l'axe z). Chaque plan de reconstruction 3 est associé à une valeur de profondeur. Cette valeur de profondeur définit une distance entre le plan 4 de l'hologramme numérique H et le plan de reconstruction 3. Dans cet exemple, le plan 4 de l'hologramme numérique H est défini au niveau de la source lumineuse ayant servi à l'acquisition de l'hologramme numérique H et présente ainsi une position de référence nulle, notée $z_0 = 0$. Le plan 4 de l'hologramme numérique H est centré sur l'axe optique de la source ayant servie à l'acquisition de l'hologramme numérique H. Ainsi, dans l'exemple de la figure 6, toutes les images $I_i$ sont centrées sur l'axe optique de la source lumineuse (qui est défini sur l'axe spatial z) et sont espacées d'une même distance $z_e$. La distance $z_e$ entre chaque plan de reconstruction 3 est similaire et est, à titre d'exemple, de 50 micromètres ($\mu$m).

Utiliser la méthode du spectre angulaire permet ainsi d'obtenir une succession d'images $I_i$ qui sont alignées sur l'axe optique de la source lumineuse ayant servie à l'acquisition de l'hologramme numérique H.

En figure 6, la distance $z_e$ séparant les images est déterminée à partir de la profondeur maximale $z_{max}$ et $z_{min}$, par exemple déterminée à partir de l'étape de détermination E1. Ainsi, la première image reconstruite $I_1$ est espacée du plan 4 de l'hologramme numérique H par la profondeur minimale $z_{min}$ alors que la dernière image reconstruite $I_n$ est espacée du plan 4 de l'hologramme numérique H par la profondeur maximale $z_{max}$.

Dans un autre mode de réalisation, l'étape de reconstruction E2 réalisée par le module de reconstruction 11 utilise la méthode décrite dans le document « Angular spectrum-based wave-propagation method with compact space bandwidth for large propagation distances », doi: 10.1364/OL.40.003420.

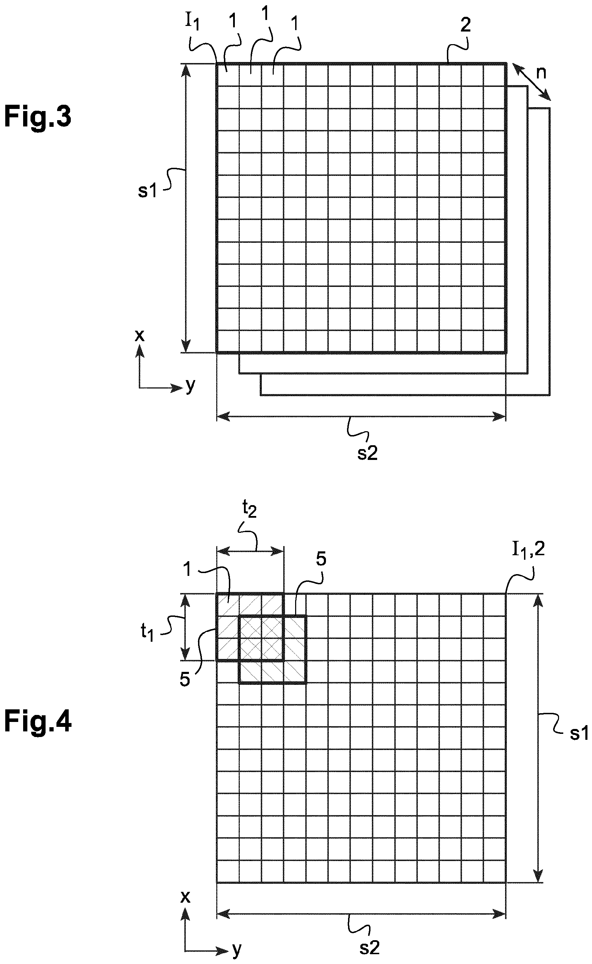

A titre d'exemple, la figure 3 illustre un exemple d'image obtenue par le module de reconstruction 11. Dans cet exemple, l'image, ici l'image $I_1$, comprend une pluralité de pixels 1. Chaque pixel 1 de l'image considérée, ici $I_1$, a une position spatiale dans l'image considérée $I_1$ qui est donnée par un numéro de ligne m et de colonne n dans l'image correspondante $I_1$.

En figure 3, l'image $I_1$ est définie par la fenêtre 2 qui est fonction de la taille de d'image $I_1$.

L'image $I_1$ illustrée en figure 3 présente aussi une première dimension principale, notée s1, et une deuxième dimension principale, notée s2.

Dans l'exemple de la figure 3, l'image $I_1$ est de forme carrée. La première dimension principale s1 est donc perpendiculaire à la deuxième dimension principale s2 et sont de même taille. Dans le procédé 100, la taille des images $I_i$ dépend de la taille de l'hologramme numérique H. De manière avantageuse, les images reconstruites $I_i$ dans cet exemple sont de la taille de l'hologramme numérique H afin de conserver toutes les informations contenues dans l'hologramme numérique H.

Le module de reconstruction 11 illustré en figure 1 reconstruit dans cet exemple des images $I_i$ de taille similaire. Par conséquent les fenêtres 2 des images $I_i$ reconstruites à l'aide du module de reconstruction 11 sont similaires.

A titre d'exemple, les images $I_i$ sont de taille 1024 x 1024 avec des pixels 1 de 6 micromètres ($\mu$m). Ces caractéristiques sont fonction de la taille du capteur utilisé pour enregistrer l'hologramme numérique H.

Bien entendu, dans la présente divulgation, les images reconstruites $I_i$ ont pu être traités par différents techniques de traitement d'image par le module de reconstruction 11. Lorsque les images reconstruites $I_i$ sont des images couleur (par exemple des images RGB), ces dernières peuvent être converties en niveau de gris par des techniques connues de l'homme du métier, par exemple pour mettre en oeuvre l'étape E6 avec l'opérateur de variance locale.

Après l'étape de reconstruction E2, le procédé 100 comprend ensuite l'étape de formation E4 de vignettes 5 par le module de formation 12. Les vignettes 5 déterminées par le module de formation 12 sont formées de pixels 1 contigus à partir de chaque image $I_i$. Les vignettes 5 sont ainsi associées respectivement à des régions bidimensionnelles R de la fenêtre 2.

Par région bidimensionnelle R, on entend des zones particulières de la fenêtre 2 définies par les pixels contigus formant la vignette 5 considérée. Ainsi, suivant cet exemple, la fenêtre 2 associée à une image donnée, par exemple l'image $I_1$ de la figure 4, est découpée en une pluralité de vignettes 5.

Dans l'exemple de la figure 4, chaque vignette 5 de l'image $I_1$ est associée à une région bidimensionnelle R.

En effet, suivant ce mode de réalisation, toutes les images $I_i$ sont découpées de la même façon. Ainsi, la région bidimensionnelle R de la vignette 5 comprenant les pixels 1 des trois premières colonnes et des trois premières lignes de l'image $I_1$ est identique à la région bidimensionnelle R de la vignette 5 comprenant les pixels des trois premières colonnes et des trois premières lignes de l'image $I_2$, ou $I_3$, ou $I_n$. Une telle caractéristique facilite la mise en oeuvre du procédé 100.

Optionnellement, chaque vignette 5 est centrée sur au moins un pixel 1 des pixels de ladite vignette 5. Dans l'exemple de la figure 4, les vignettes 5 sont centrées sur un pixel 1, ce qui permet d'obtenir des régions bidimensionnelles R centrées sur un pixel 1. Une telle configuration permet de définir un point de repère à chaque vignette 5 de chaque image $I_i$. Bien entendu, les régions bidimensionnelles R peuvent se superposer. Cela est dû au fait que les pixels peuvent appartenir à plusieurs régions bidimensionnelles R. De préférence, les vignettes sont centrées sur un pixel présentant une mise au point optimale comparée à une mise au point d'un pixel adjacent audit pixel. Une telle caractéristique permet d'améliorer les performances de l'estimation de la carte de profondeur. Par mise au point optimale d'un pixel, on entend un pixel présentant un faible niveau de bruit (par exemple présentant pas ou peu de flou).

A titre d'exemple, chaque vignette 5 est dans la suite repérée à partir de la région bidimensionnelle R auquel elle est associée et aux coordonnées du pixel 1 sur laquelle elle est centrée. Ainsi, suivant ce principe, chaque vignette 5 est illustrée par les informations suivantes $R_{i,\,n,\,m}$, avec i l'indice de l'image associée à la vignette 5 et m et n correspondant aux coordonnées du pixel 1 sur lequel la vignette 5 associée à la région $R_i$ est centré. De ce fait, la vignette 5 en haut à gauche de l'image $I_1$ illustrée en figure 4 sera représentée par les données $R_{1,2,2}$.

Dans l'exemple illustré en figure 4, chaque vignette 5 présente une première dimension secondaire, notée t1, et une deuxième dimension secondaire, notée t2. Les vignettes 5 sont de préférence toutes de taille similaire, facilitant l'implémentation du procédé 100.

Dans un mode de réalisation du procédé 100, chaque vignette 5 présente une forme rectangulaire définie par la formule suivante :

$$R_{i,m,n}(u, v) = I_i\left(m + u - \frac{s1}{2}, n + v - \frac{s2}{2}\right)$$

avec i correspondant à un indice d'une image, notée I, associé à une profondeur, m et n correspondant aux cordonnées du pixel 1 dans l'image $I_i$ sur lequel est centré la vignette 5 dans la fenêtre 2, u et v correspondant aux cordonnées du pixel dans la région bidimensionnelle R associée à la vignette 5 dans laquelle le pixel est centré, s1 correspondant à une première dimension principale de la fenêtre 2 associée à l'image I d'indice i et s2 correspondant à une deuxième dimension principale de la fenêtre associée à l'image I d'indice i.

Sélectionner des vignettes 5 présentant une taille déterminée par la formule ci-dessus permet d'adapter la précision de la carte de profondeur C. En effet, choisir une taille de vignette 5 trop petite par rapport à la scène de l'hologramme numérique H provoquerait un sur-échantillonnage des vignettes 5 des images $I_i$ et ce qui pourrait allonger le temps d'implémentation du procédé 100 et induire des erreurs dans l'estimation de la carte de profondeur C. A l'inverse, prendre des vignettes 5 de taille trop importante pourrait induire un sous-échantillonnage des vignettes 5 images $I_i$. La carte de profondeur C obtenue par le procédé 100 pourrait être moins précise.

De manière avantageuse, la taille des vignettes 5 est adaptée à la taille de l'image $I_1$. Notamment, la première dimension secondaire t1 dépend de la première dimension principale s1 par un facteur de réduction et la deuxième dimension secondaire t2 dépend de la deuxième dimension principale s2 par un facteur de réduction. Une telle configuration permet d'améliorer la vitesse d'implémentation du procédé 100 mis en oeuvre par l'unité de calcul 10.

De préférence, le facteur de réduction associé à la première dimension secondaire t1 est similaire au facteur de réduction associé à la deuxième dimension secondaire t2. Cela permet d'améliorer encore plus la facilité de mise en oeuvre et le temps d'implémentation du procédé.

De manière avantageuse, le facteur de réduction associé à la première dimension secondaire t1 est choisi entre 61 et 32 et le facteur de réduction associé à la première dimension secondaire t2 est choisi entre 61 et 32. Une telle configuration permet d'adapter la taille des vignettes 5 aux objets de la scène, ce qui améliore la précision de l'estimation de la carte de profondeur C.

Selon un mode de réalisation, la première dimension principale s1 et la deuxième dimension principale s2 des images $I_i$ formées par le module de reconstruction 11 sont égales. Ainsi, cela permet d'obtenir des vignettes 5 et régions bidimensionnelles R de forme carrée. Une telle configuration améliore la facilité d'implémentation du procédé 100 tout en permettant d'obtenir de bon résultat sur l'estimation de la carte de profondeur.

Dans un mode de réalisation, la première et deuxième dimensions secondaires t1, t2 sont similaires. A titre d'exemple, les vignettes 5 peuvent ainsi présenter une taille définie en nombre de pixels, par exemple de 5 pixels x 5 pixels (i.e. 5 x 5 pixels), ou 9 pixels x 9 pixels, ou 13 pixels x 13 pixels, ou 17 pixels x 17 pixels, ou 21 pixels x 21 pixels ou 33 pixels x 33 pixels avec des pixels de taille entre 1 $\mu$m à 15 $\mu$m, de préférence égaux à 6 $\mu$m.

Suivant ce mode de réalisation, une taille de vignette 5 de 13 x 13 pixels permet d'obtenir une meilleure estimation de la profondeur des pixels positionnés sur les contours de zones ou objets de la scène ou sur les coins et bords l'hologramme numérique H alors que l'estimation de profondeur sur les zones présentant des faibles variations de profondeur et/ou ayant peu de texture seront moins performants.

Pour des vignettes 5 de taille supérieure à 13 x 13 pixels (avec des pixels de 6 μm), plus d'informations de profondeur sont comprises dans ces vignettes 5 (i.e. car ces vignettes 5 sont constituées de plus de pixels 1), ce qui permet d'améliorer l'estimation de la carte de profondeur. Toutefois, pour des vignettes de taille 33 x 33 pixels ou de taille supérieur à 33 x 33 pixels avec des pixels de 6 μm, trop d'informations de profondeurs peuvent être compris dans les vignettes 5. Ainsi, il y a une forte probabilité d'observer des pixels ayant des profondeurs différentes et de grande variabilité (i.e. variation de profondeur importante) à l'intérieur d'une même vignette 5. Le choix d'une seule valeur de profondeur Dp par vignette 5 à l'étape de détermination E8 pourrait dans ce mode de réalisation influencer l'étape de détermination E10 de la profondeur d'un pixel et donc induire de mauvaises performances dans l'estimation de la carte de profondeur (voir ci-dessous).

Ainsi, la taille des vignettes 5 influence l'estimation de la carte de profondeur C. Cette dernière est donc choisie en fonction de la scène de l'hologramme numérique H.

Dans l'exemple énoncé ci-dessus, les pixels 1 des images et de l'hologramme numérique H sont de préférence de 6 μm. Toutefois, des résultats identiques peuvent être obtenus pour des pixels de 1 à 15 μm. A titre d'exemple, la taille des vignettes 5 données précédemment peut être augmentée par un facteur entre 2 et 5 pour des pixels 1 inférieurs à 6 μm et diminuée par un facteur entre 2 et 5 pour des pixels 1 supérieurs à 6 μm.

Le procédé illustré en figure 5 comprend ensuite une étape d'application E6 de l'opérateur OPT à chacune des vignettes R de chaque image $I_i$ associée à une profondeur $z_i$ pour fournir une métrique par vignette 5 et par profondeur $z_i$. L'étape d'application E6 est mis en oeuvre par le module d'application 13.

Dans la suite, l'application de l'opérateur OPT sur l'ensemble des vignettes 5 est représentée par OPT($R_{i, n, m}$).

Suivant la présente divulgation, plusieurs types d'opérateurs peuvent être utilisés. De manière non limitative, les opérateurs utilisés peuvent être basés sur au moins un des opérateurs suivants :

- un gradient ;
- un Laplacien ;
- des ondelettes ;
- une transformée de Gabor ;
- des statistiques à partir d'informations extraites sur les n images ou sur l'hologramme numérique H ;
- une transformée en cosinus discrète.

Le choix de l'opérateur dépend du bruit présent sur chaque vignette 5. En effet, le bruit de tavelure ou de chatoiement et/ou le flou présent sur chaque vignette 5 influence(nt) le choix de l'opérateur OPT.

A titre d'exemple, l'opérateur OPT basé sur le gradient est facile à mettre en oeuvre et peu coûteux en temps de calcul. Toutefois, cet opérateur OPT peut augmenter le flou des vignettes 5 et donc induire des erreurs ou imprécisions dans l'estimation de la carte de profondeur C. Par conséquent, ce type d'opérateur OPT est de préférence sélectionné lorsque le flou moyen sur s'ensemble des vignettes 5 est faible.

De manière privilégiée, l'opérateur OPT basé sur les statistiques à partir d'informations extraites sur les n images ou sur l'hologramme numérique H permet d'obtenir de meilleurs résultats dans la sélection de la profondeur attribuée à chaque pixel (étape E10), améliorant la précision du procédé 100. A titre d'exemple, l'opérateur statistique utilisé est l'opérateur de variance locale du niveau d'intensité sur les n images, de préférence l'opérateur de variance locale de niveau de gris lorsque les images $I_i$ sont en niveau de gris.

L'étape d'application E6 fournit en sortie une métrique par vignette 5 et par profondeur. Ainsi, toutes les vignettes 5 des différents plans de reconstruction 3 sont associées à une métrique.

Le procédé 100 comprend ensuite l'étape de détermination E8 par le module de détermination 14 de la profondeur Dp associée à chaque région bidimensionnelle R sur la base au moins des métriques relatives aux vignettes 5 associées à la région bidimensionnelle concernée R.

De préférence, l'étape de détermination E8 du procédé 100 travaille de manière séparée sur chaque région bidimensionnelle R. Chaque région bidimensionnelle R est étudiée sur l'ensemble des plans de reconstruction 3. Pour cela, l'étape de détermination E8 du procédé 100 utilise un critère d'optimisation qui est appliqué de manière individuelle à chaque région bidimensionnelle R positionnée dans les différents plans de reconstruction 3. Cela permet de suivre l'évolution de l'information contenue dans la région bidimensionnelle R donnée dans les différents plans de reconstruction 3.

Dans cet exemple, le critère d'optimisation est basé sur au moins un des critères suivants :

- argmin et calculé dans cet exemple suivant la formule suivante :

$$Dp_{m,n} = argmin_{i=1,..n}OPT(R_{i,m,n})$$

- argmax et calculé dans cet exemple par la formule suivante :

$$Dp_{m,n} = argmax_{i=1,..n}OPT(R_{i,m,n}),$$

avec OPT($R_{i,m,n}$) correspondant à la métrique d'une région bidimensionnelle R dans le plan de reconstruction 3 associé à une profondeur z d'indice i avec i correspondant à l'image de reconstruction (i.e. donnant ainsi la profondeur du plan de reconstruction 3), $Dp_{m,n}$ correspondant à la profondeur attribuée à la région bidimensionnelle R comprenant le pixel de centrage de coordonnées m, n dans l'image $I_i$.

Dans la présente divulgation, il est recherché pour une région bidimensionnelle R donnée évoluant dans les différents plans de reconstruction 3 la profondeur $z_i$ pour laquelle la région bidimensionnelle R présente le moins de bruit de tavelure ou de chatoiement.

Selon un premier mode de réalisation, une telle profondeur $z_i$ peut soit correspondre à :

- un minimum global atteint en recherchant par exemple la valeur maximale d'intensité du pixel sur lequel est centré la région bidimensionnelle R donnée dans les plans de reconstruction 3 avec le critère argmin, ou
- un maximum global atteint en recherchant par exemple la valeur maximale d'intensité du pixel sur lequel est centré la région bidimensionnelle R donnée dans les plans de reconstruction 3 avec le critère argmax.

Ainsi, suivant ce mode de réalisation il est donc nécessaire de vérifier la variation de la métrique dans les différents plans de reconstruction 3 pour chaque région bidimensionnelle R.

Dans un deuxième mode de réalisation, la profondeur Dp associée à chaque région bidimensionnelle R est déterminée par sélection de la profondeur pour laquelle est maximal l'écart en valeur absolue entre la métrique relative à la région bidimensionnelle R concernée et à la profondeur concernée, et la moyenne, notée μ des métriques relatives à la région bidimensionnelle R concernée.

Suivant ce deuxième mode de réalisation, la profondeur Dp associée à chaque région bidimensionnelle R peut être déterminée suivant la formule suivante :

$$Dp_{m,n} = argmax_{i=1,..n}|\mu - OPT(R_{i,m,n})| \; avec \; \mu = \frac{1}{n}\sum_i OPT(R_{i,m,n})$$

avec μ la moyenne de la métrique (résultat de l'étape d'application E6 OPT(Ri, n, m)) de toutes les régions bidimensionnelles R moyennée sur tous les plans de reconstruction 3, OPT($R_{i,m,n}$) correspondant à la métrique d'une région bidimensionnelle R dans le plan de reconstruction 3 associée à une profondeur z d'indice i avec i correspondant à l'image de reconstruction (i.e. donnant ainsi la profondeur du plan de reconstruction 3), | | l'opérateur de valeur absolue, $Dp_{m,n}$ correspondant à la profondeur attribuée à la région bidimensionnelle R comprenant le pixel de centrage de coordonnées m, n.

Le deuxième mode de réalisation permet ainsi de rechercher simultanément les maxima et minima globaux des différentes régions bidimensionnelles R (ici déterminés à partir du pixel sur lequel est centrée la région bidimensionnelle R). Suivant ce deuxième mode de réalisation et pour une région bidimensionnelle R donnée, il n'est plus nécessaire de vérifier la variation de la métrique dans les différents plans de reconstruction 3 pour sélectionner le critère d'optimisation approprié (argmin ou argmax comme décrit dans le premier mode de réalisation), ce qui permet d'améliorer le temps d'implémentation du procédé 100. En outre, une telle configuration améliore aussi la précision et la facilité d'implémentation puisqu'un seul type d'opérateur optimisation est utilisé pour l'ensemble des régions bidimensionnelles R.

Ainsi, à la suite de l'étape de détermination E8, toutes les régions bidimensionnelles R se voient attribuer une valeur de profondeur Dp.

Le procédé 100 comprend ensuite l'étape de détermination E10 de la profondeur dp d'un pixel 1 de la carte de profondeur C par sélection de la profondeur Dp présentant un nombre de répétition maximal dans les régions bidimensionnelles R comprenant le pixel 1 concerné. Cette étape de détermination E10 permet d'attribuer à chaque pixel 1 sa profondeur dp spécifique.

A titre d'exemple, la profondeur dp attribuée à un pixel 1 dans l'étape de détermination E10 peut être déterminée à partir de la formule suivante :

$$dp_{m,n} = max(A)$$

$$avec\ A = count\left(argmax_{i=1,..n}\big|\mu - OPT(R_{i,m,n})\big|\right) = count\left(Dp_{m,n}\right)$$

et

$$\mu = \frac{1}{n}\sum_i OPT(R_{i,m,n})$$

où count($Dp_{n,m}$) correspond à une fonction qui est configurée pour compter le nombre d'occurrence de la valeur $Dp_{n,m}$ associée à un pixel et max(A) la fonction qui retourne le nombre maximal d'occurrence de la valeur $Dp_{m,n}$.

Dans un premier cas, un pixel 1 donné peut présenter une valeur de profondeur Dp identique dans toutes les régions bidimensionnelles R dans lesquelles il est compris.

Dans un deuxième cas, un pixel 1 donné peut présenter plusieurs valeurs de profondeur Dp sur l'ensemble des régions bidimensionnelles R. Cela est notamment possible au niveau des pixels 1 appartenant à plusieurs régions bidimensionnelles R.

Suivant ce mode de réalisation, pour un pixel donné, chaque fois qu'une région bidimensionnelle R contient ce pixel donné, la valeur de profondeur Dp déterminée à l'étape de détermination E8 pour cette région bidimensionnelle R est enregistrée. Le module de détermination 15 compte ensuite le nombre de répétition des différentes profondeurs Dp qui ont été attribuées à toutes les régions bidimensionnelles comprenant le pixel concerné (étape précédente de détermination E8). Ainsi, la valeur Dp qui présente le plus grand nombre de répétition est sélectionnée pour être la profondeur dp attribuée à ce pixel dans l'étape de détermination E10. De ce fait, pour un pixel donné, la valeur de profondeur dp attribuée à ce pixel est la profondeur Dp qui a été comptabilisée le plus grand nombre de fois.

Le procédé 100 permet donc de traiter les pixels 1 de manière individuelle pour leur attribuer une seule est unique profondeur dp. Le procédé 100 propose ainsi une solution facile à mettre en oeuvre et peu coûteuse en temps de calcul pour attribuer de manière précise et fiable une profondeur dp à un pixel afin de construire une carte de profondeur à partir de l'hologramme numérique H.

Suivant un mode de réalisation du procédé 100, l'étape de détermination E10 est de préférence réitérée pour tous les pixels de la fenêtre. H. De cette manière, le procédé 100 fournit une carte de profondeur C pour laquelle chaque pixel de la carte de profondeur C contient une information de profondeur. De cette manière, la carte de profondeur estimée par l'intermédiaire du procédé 100 peut être considérée comme une représentation en deux dimensions de la scène 3D dans laquelle les colonnes et les lignes de la carte de profondeurs C fournissent une information spatiale (par exemple, le long des axes x, et y) et la valeur d'intensité associée à chaque pixel donne une information sur la profondeur de ce pixel (information orientée le long de l'axe de profondeur z).

Optionnellement, le procédé 100 comprend une étape de construction E12 d'une image couleur, notée $I_{couleur}$ par le module de construction 16. L'image couleur $I_{couleur}$ est déterminée en utilisant la carte de profondeur C fournie à la fin de l'étape de détermination E10. Pour cela le module de construction 16 associe à chaque pixel de la carte de profondeur C une information colorimétrique. Cette information colorimétrique est déterminée en utilisant l'information colorimétrique du pixel dans l'image $I_i$, c'est-à-dire dans le plan de reconstruction 3, associée à la valeur de profondeur dp déterminée à l'étape de détermination E10.

De cette manière, le procédé 100 retrouve de manière simple l'information colorimétrique à partir de la carte de profondeur C et des informations des images reconstruites $I_i$ dans les plans de reconstruction 3 à la profondeur dp.

L'image couleur $I_{couleur}$ obtenue à la fin de l'étape de construction E12 comprend ainsi dans un premier espace la carte de profondeur C et dans un deuxième espace une image couleur, par exemple dans un espace RGB. L'image couleur $I_{couleur}$ ainsi obtenue peut être une image RGB-D.

Une telle image $I_{couleur}$ permet ainsi de décrire la géométrie de la scène ainsi que sa profondeur. Cette image $I_{couleur}$ peut ainsi être utilisée dans divers applications, comme dans la détection du mouvement en trois dimensions qui peut être utilisée pour la compression d'une vidéo holographique.

Un deuxième exemple d'un procédé 200 mis en oeuvre par l'unité de traitement 20 illustrée en figure 2 va être explicité à l'aide de la figure 7.

Le procédé 200 est un procédé de codage d'une séquence vidéo. Le procédé 200 illustré en figure 7 utilise un premier hologramme numérique, noté H1, et un deuxième hologramme numérique, noté H2. Le premier hologramme numérique H1 peut présenter une scène à un temps donné et le deuxième hologramme numérique H2 peut illustrer la scène à un deuxième temps donné, supérieur au premier temps.

Le procédé 200 comprend ainsi une étape E22 d'estimation d'une première carte profondeur C1 à partir du premier hologramme numérique H1 par l'intermédiaire du procédé 100 illustré en figure 5. Une telle étape permet de fournir une première carte de profondeur C1 à partir du premier hologramme numérique H1.

Le procédé 200 comprend aussi l'étape E22 d'estimation d'une deuxième carte profondeur C2 à partir du deuxième hologramme numérique H2 par l'intermédiaire du procédé 100 illustré en figure 5. Une telle étape permet de fournir une deuxième carte de profondeur C2 à partir du deuxième hologramme numérique H2.

Dans ce mode de réalisation, les étapes d'estimation E22 sont réalisées par l'unité de calcul 10 illustrée en figure 1.

Après avoir obtenue une carte de profondeur pour chaque hologramme numérique H1, H2, le procédé 200 comprend ensuite une étape de détermination E24 d'un vecteur de mouvement $v_m$ sur la base de la première carte de profondeur C1 obtenue à partir du premier hologramme H1 et sur la base de la deuxième carte de profondeur C2 obtenue à partir du deuxième hologramme H2. Ce vecteur de mouvement $v_m$ est de préférence déterminé par le module de détermination 21.

Dans un premier mode de réalisation, le procédé 100 utilisé dans les étapes E22 ne comprend pas d'étape de construction E12. Dans ce cas, seule une carte de profondeur associée au premier hologramme H1 et une carte de profondeur associée au deuxième hologramme H2 sont donc obtenues à la suite des étapes E22. Le procédé 200 fournit ainsi dans ce mode de réalisation un vecteur de mouvement $v_m$ en une dimension le long de la dimension spatiale de profondeur donnée le long de l'axe de profondeur z.

Dans un deuxième mode de réalisation, il est possible d'obtenir par le procédé 200 un vecteur de mouvement $v_m$ ayant des composantes spatiales en trois dimensions, c'est-à-dire sur les axes x, y et z. Dans ce cas, le procédé 100 utilisé dans les étapes E22 comprend l'étape de construction E12. De ce fait, chaque étape E22 est configurée pour fournir à partir de l'image couleur $I_{couleur}$, un vecteur de mouvement $v_m$ en deux dimensions à l'aide des composantes spatiales x et y extraites de l'espace colorimétrique de l'image couleur $I_{couleur}$ (par exemple espace colorimétrique RGB) et un vecteur de mouvement $v_m$ sur la dimension spatiale de profondeur définie le long de l'axe de profondeur z et déterminé à partir de la carte de profondeur C enregistrée dans l'espace D de l'image $I_{couleur}$.

Optionnellement, le vecteur de mouvement $v_m$ obtenu à l'étape E24 peut être utilisé pour prédire un hologramme numérique, noté $H_p$.

Suivant ce mode de réalisation et de manière non limitative, le procédé 200 comprend à la suite de l'étape de détermination E24 du vecteur de mouvement $v_m$, une étape de calcul E26 d'un hologramme prédit $H_p$ par le module de prédiction 22. Dans l'exemple illustré en figure 7, l'hologramme prédit $H_p$ est obtenu par application au premier hologramme H1 du vecteur de mouvement $v_m$ déterminé à l'étape de détermination E24.

Le procédé 200 comprend ensuite une étape de calcul E28 d'un résidu r par différence entre le deuxième hologramme H2 et l'hologramme prédit $H_p$ calculé à l'étape de calcul E26. L'étape de calcul E28 est dans cet exemple réalisée par le module de calcul 23 illustré en figure 2.

## Revendications

1. Procédé (100), mis en oeuvre par une unité de calcul (10), d'estimation d'une carte de profondeur à partir d'un hologramme numérique représentant une scène, ledit procédé (100) comprenant :

   - une étape de reconstruction (E2), au moyen dudit hologramme numérique, de n images de la scène, chaque image étant associée à une profondeur de ladite scène et comprenant une pluralité de pixels (1), chaque image étant définie par une même fenêtre (2) ;
   - pour chaque image, une étape de formation (E4) de vignettes (5) formées par des pixels (1) contigus et associées à des régions bidimensionnelles de la fenêtre (2) ;
   - une étape d'application (E6) d'un opérateur à chacune des vignettes (5) de chaque image associée à une profondeur pour fournir une métrique par vignette (5) et par profondeur ;
   - une étape de détermination (E8) d'une profondeur associée à chaque région bidimensionnelle sur la base au moins des métriques relatives aux vignettes (5) associées à la région bidimensionnelle concernée ;
   - une étape de détermination (E10) de la profondeur d'un pixel (1) de la carte de profondeur par sélection de la profondeur présentant un nombre de répétition maximal dans les régions bidimensionnelles comprenant le pixel (1) concerné.

2. Procédé (100) selon la revendication 1, dans lequel la profondeur associée à chaque région est déterminée par sélection de la profondeur pour laquelle est maximal l'écart en valeur absolue entre la métrique relative à la région bidimensionnelle concernée et à la profondeur concernée, et la moyenne des métriques relatives à la région bidimensionnelle concernée.

3. Procédé (100) selon l'une quelconque des revendications 1 à 2, dans lequel la fenêtre (2) des n images présente une première et deuxième dimensions principales et chaque vignette (5) présente une première et deuxième dimensions secondaires, ladite première dimension secondaire, respectivement ladite deuxième dimension secondaire, dépendant de la première dimension principale, respectivement de la deuxième dimension principale, par un facteur de réduction.

4. Procédé (100) selon la revendication 3, dans lequel le facteur de réduction est compris entre 61 et 32.

5. Procédé (100) selon l'une quelconque des revendications 1 à 4, dans lequel chaque vignette (5) est centrée sur au moins un pixel (1).

6. Procédé (100) selon la revendication précédente, dans lequel chaque vignette (5) présente une forme rectangulaire définie par la formule suivante :

$$R_{i,m,n}(u,v) = I_i\left(m + u - \frac{s1}{2}, n + v - \frac{s2}{2}\right)$$

avec i correspondant à un indice d'une image, notée I, associé à une profondeur des n images, m et n correspondant aux cordonnées du pixel dans la fenêtre, u et v correspondant aux cordonnées du pixel dans la région bidimensionnelle associée à la vignette dans laquelle le pixel est centré, s1 correspondant à une première dimension principale de la fenêtre associée à l'image I d'indice i et s2 correspondant à une deuxième dimension principale de la fenêtre associée à l'image I d'indice i.

7. Procédé (100) selon l'une quelconque des revendications 3 à 6, dans lequel la première et deuxième dimensions principales sont égales.

8. Procédé (100) selon l'une quelconque des revendications 1 à 7, dans lequel il comprend une étape de détermination d'une profondeur minimale et d'une profondeur maximale de ladite scène, les n images étant espacées d'une distance échantillonnée uniformément dans un intervalle défini entre la profondeur maximale et la minimale de ladite scène.

9. Procédé (100) selon l'une quelconque des revendications 1 à 8, dans lequel n est égal à 250.

10. Procédé (100) selon l'une quelconque des revendications 1 à 9, dans lequel l'opérateur appliqué dans l'étape d'application (E6) est au moins basé sur au moins un des opérateurs suivants :

   - un gradient ;
   - un Laplacien ;
   - des ondelettes ;
   - une transformée de Gabor ;
   - des statistiques à partir d'informations extraites sur les n images ou sur l'hologramme numérique ;
   - une transformée en cosinus discrète.

11. Procédé (100) selon l'une quelconque des revendications 1 à 10, dans lequel les n images fournies à l'étape de reconstruction holographique sont calculées en utilisant une propagation du spectre angulaire définie par la formule suivante :

$$I_i = F^{-1}\left\{F(H)e^{j2\pi z_i\sqrt{\lambda^{-2}-f_x^2-f_y^2}}\right\}$$

avec F et $F^{-1}$ correspondant à des transformées de Fourier directe et inverse, respectivement, et $f_x$ et $f_y$ sont les coordonnées fréquentielles de l'hologramme numérique dans le domaine de Fourier selon une première direction spatiale x et une deuxième direction spatiale y de l'hologramme numérique, $\lambda$ la longueur d'onde d'acquisition, i l'indice de l'image I reconstruite avec i allant de 1 à n, $z_i$ la profondeur associée à l'image reconstruite.

**12.** Procédé (100) selon l'une quelconque des revendications 1 à 11, dans lequel le procédé (100) comprend en outre une construction d'une image couleur associant à un pixel de la carte de profondeur des informations colorimétriques sur la base des informations colorimétriques du pixel concerné à la profondeur déterminée à l'étape de détermination de la profondeur d'un pixel de la carte de profondeur.

**13.** Procédé (200) de codage d'une séquence vidéo comprenant au moins un premier hologramme numérique et au moins un deuxième hologramme numérique, dans lequel il comprend une étape d'estimation (E22) d'une première carte profondeur à partir du premier hologramme numérique suivant le procédé (100) selon l'une quelconque des revendications 1 à 12 et une étape d'estimation (E22) d'une deuxième carte profondeur à partir du deuxième hologramme numérique suivant le procédé (100) selon l'une quelconque des revendications 1 à 12, ledit procédé (200) comprenant en outre une étape de détermination (E24) d'un vecteur de mouvement sur la base de la première et deuxième cartes de profondeur.

**14.** Procédé (200) de codage selon la revendication 13, dans lequel ledit procédé (200) comprend :

- une étape de calcul (E26) d'un hologramme prédit par application au premier hologramme dudit vecteur de mouvement ;
- une étape de calcul (E28) d'un résidu par différence entre le deuxième hologramme et l'hologramme prédit.

**15.** Programme d'ordinateur comprenant des instructions exécutables par un processeur et conçues pour mettre en oeuvre un procédé selon l'une quelconque des revendication 1 à 14 lorsque ces instructions sont exécutées par le processeur.

**16.** Unité de calcul (10) pour estimer une carte de profondeur à partir d'un hologramme numérique représentant une scène, ladite unité de calcul comprenant :

- un module de reconstruction (11) configuré pour reconstruire n images de ladite scène au moyen dudit hologramme numérique, chaque image étant associée à une profondeur de ladite scène et comprenant une pluralité de pixels, chaque image étant définie par une même fenêtre ;
- un module de formation (12) configuré pour fournir des vignettes formés de pixels contigus à partir de chaque image, lesdites vignettes étant associées respectivement à des régions bidimensionnelles de la fenêtre ;
- un module d'application (13) configuré pour appliquer un opérateur à chacune des vignettes de chaque image associée à une profondeur pour fournir une métrique par vignette et par profondeur ;
- un module de détermination (14) d'une profondeur configuré pour déterminé une profondeur associée à chaque région bidimensionnelle ;
- un module de détermination (15) configuré pour déterminer de la profondeur d'un pixel de la carte de profondeur par sélection de la profondeur présentant un nombre de répétition maximal dans les régions bidimensionnelles comprenant le pixel concerné.

**17.** Unité de calcul selon la revendication 16, dans laquelle le module de de détermination (14) d'une profondeur associée à chaque région bidimensionnelle est configuré pour sélectionner la profondeur pour laquelle est maximal l'écart en valeur absolue entre la métrique relative à la région bidimensionnelle concernée et à la profondeur concernée, et la moyenne des métriques relatives à la région bidimensionnelle concernée.

# Fig.1

H

$I_1...I_n$

11

10

12

$5, R_{i,m,n}$

13

$OPT(R_{i,m,n})$

14

$D_P$

15

dp,C

16

$I_{couleur}$

# Fig.2

$H_1$    $H_2$

10

$C_1$    $C_2$

21

$v_m$

$H_1$

22

20

$H_p$

$H_2$

23

r

**Fig.3**

**Fig.4**

# Fig.5

$[z_{min}, z_{max}]$ — E1

$I_1,...I_n$ — E2

$5,R_{i,m,n}$ — E4

$OPT(R_{i,m,n})$ — E6

$D_P$ — E8

$dp,C$ — E10

E12

$I_{couleur}$

100

# Fig.6

# Fig.7

Europäisches
Patentamt

European
Patent Office

Office européen
des brevets

# RAPPORT DE RECHERCHE EUROPEENNE

Numéro de la demande

**EP 23 20 2801**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2021/216747 A1 (MASSACHUSETTS INST TECHNOLOGY [US]; MATUSIK WOJCIECH [US]) 28 octobre 2021 (2021-10-28) | 1,2,5,9, 10,12, 15-17 | INV. G03H1/08 |
| A | * abrégé * * alinéa [0044] * * alinéa [0091] – alinéa [0097] * ----- | 3,4,6-8, 11,13,14 | ADD. G06T7/20 G06V10/77 G06T7/55 G06V20/64 |

**DOMAINES TECHNIQUES RECHERCHES (IPC)**

G03H
G06V

Le présent rapport a été établi pour toutes les revendications

| Lieu de la recherche | Date d'achèvement de la recherche | Examinateur |
|---|---|---|
| Munich | 7 février 2024 | Sittler, Gilles |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 23 20 2801

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-02-2024

| Document brevet cité au rapport de recherche | Date de publication | Membre(s) de la famille de brevet(s) | Date de publication |
|---|---|---|---|
| WO 2021216747 A1 | 28-10-2021 | AUCUN | |

Pour tout renseignement concernant cette annexe : voir Journal Officiel de l'Office européen des brevets, No.12/82